Europäisches Patentamt

European Patent Office

Office européen des brevets

(11) Numéro de publication: **0 174 255**
**B1**

(12) **FASCICULE DE BREVET EUROPEEN**

(45) Date de publication du fascicule du brevet:
03.08.88

(21) Numéro de dépôt: **85401707.6**

(22) Date de dépôt: **03.09.85**

(51) Int. Cl.⁴: **F 04 D 27/02**

(54) Structure d'anneau et dispositif de décharge de compresseur comportant cet anneau.

(30) Priorité: **06.09.84 FR 8413693**

(43) Date de publication de la demande:
**12.03.86 Bulletin 86/11**

(45) Mention de la délivrance du brevet:
**03.08.88 Bulletin 88/31**

(84) Etats contractants désignés:
**DE FR GB**

(56) Documents cités:
**FR - A - 1 200 157**
**FR - A - 1 224 445**
**FR - A - 1 232 667**
**FR - A - 1 328 747**
**FR - A - 2 068 282**
**FR - A - 2 349 740**
**GB - A - 911 535**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Jourdain, Gérard Ernest André, 4, résidence "L' Arcadie" Saintry Sur Seine, F-91100 Corbeil Essonnes (FR)**
Inventeur: **Soligny, Marcel Robert, 136, boulevard Jean Mermoz, F-94150 Chevilly-Larue (FR)**

(74) Mandataire: **Moinat, François, S.N.E.C.M.A. Service des Brevets Boîte Postale 81, F-91003 Evry Cédex (FR)**

ACTORUM AG

**Description**

L'invention concerne un anneau, formant soupape, mobile axialement pour commander l'écoulement d'une veine de gaz à l'intérieur d'une turbomachine, en particulier l'invention s'applique à un anneau commandant une ouverture de décharge de compresseur d'un moteur à turbine à gaz.

Dans un moteur de ce type, il est connu d'associer au compresseur des soupapes disposées au droit d'un ou plusieurs étages destinées à décharger vers l'extérieur une partie du débit d'air, lorsqu'il est amené à fonctionner, à charge partielle par exemple, hors de la plage pour laquelle il a été conçu. On évite ainsi l'apparition du phénomène dit de pompage dû au décollement des filets fluides le long des aubes, entrainant une instabilité de l'écoulement.

Les moyens de décharge usuels comprennent une pluralité de trappes réparties sur le pourtour du carter et commandées en synchronisme. Ces trappes doivent offrir une section de passage importante, être capable de s'ouvrir et se fermer rapidement, et présenter une bonne étanchéité en position fermée afin de ne pas altérer les performances du moteur. Ces conditions conduisent à des dispositifs lourds, compliqués et d'encombrement axial non négligeable. De plus, l'ouverture de ces trappes crée dans la veine principale des sillages, des hétérogénéités qui peuvent perturber le fonctionnement du compresseur aval.

Le brevet US 3057541 décrit une soupape de décharge annulaire coopérant avec une ouverture de forme correspondante. Cette disposition permet de réduire l'encombrement et simplifier la commande; cependant l'anneau représenté est une simple lame de faible tenue mécanique, sujette aux vibrations et aux déformations.

L'étanchéité est insuffisante. De plus, cet anneau coulisse axialement sur une portée annulaire du côté extérieur de la paroi sans reformer en position fermée un contour de paroi lisse; les bords des orifices d'évacuation entrainent des perturbations dans l'écoulement.

Le brevet US 3588268 (≙ FR-A-2068282) remédie partiellement à ces défauts en proposant un anneau de décharge de section transversale en U, donc moins sujet aux déformations, les portées ont été de plus inclinées pour assurer une meilleure étanchéité. Cet anneau cependant présente une rigidité insuffisante, et la paroi présente également une discontinuité au niveau des orifices d'évacuation entrainant des turbulences dans l'écoulement.

La document FR-A-2349740, dont l'enseignement a servi à établir le préambule de la revendication principale de la présente demande, montre une porte de forme annulaire montée coulissante de façon à commander l'ouverture d'une fente annulaire, mais cette porte semble être constituée d'une simple lame qui, si elle présente l'avantage de reconstituer sensiblement la paroi de la veine en position fermée, souffre néanmoins des mêmes inconvénients que le brevet US 3057541 sur le plan de la tenue aux vibrations et de l'étanchéité.

L'invention a donc pour but de réaliser une turbomachine, comprenant un compresseur axial muni d'un dispositif de décharge comportant une soupape à déplacement axial, en forme d'anneau coopérant avec une ouverture en forme de fente annulaire tronconique ménagée dans une paroi de la veine, l'anneau comportant une première partie conformée de façon à venir, en position de fermeture, se loger entre les bords de ladite fente et reconstituer la paroi de la veine, tel que la structure de l'anneau lui assure une rigidité suffisante pour résister aux sollicitations de déformation dans les différentes conditions d'utilisation.

Conformément à l'invention, l'anneau de soupape est en forme de gouttière orientée suivant l'axe de l'anneau et est constitué d'une première peau annulaire à section incurvée et d'une deuxième peau annulaire également à section incurvée enchassée dans la première peau, et solidarisée à elle, les deux peaux ménageant entre elles une cavité, la première partie, conformée de façon à venir en position de fermeture, se loger entre les bords de la fente de la veine, faisant partie intégrante de la première peau annulaire.

La description qui suit, en regard des dessins annexés, se rapporte à un mode de réalisation préféré de l'invention où l'anneau est représenté dans son application à la commande de l'ouverture d'une fente annulaire de décharge de compresseur de turboréacteur à double flux.

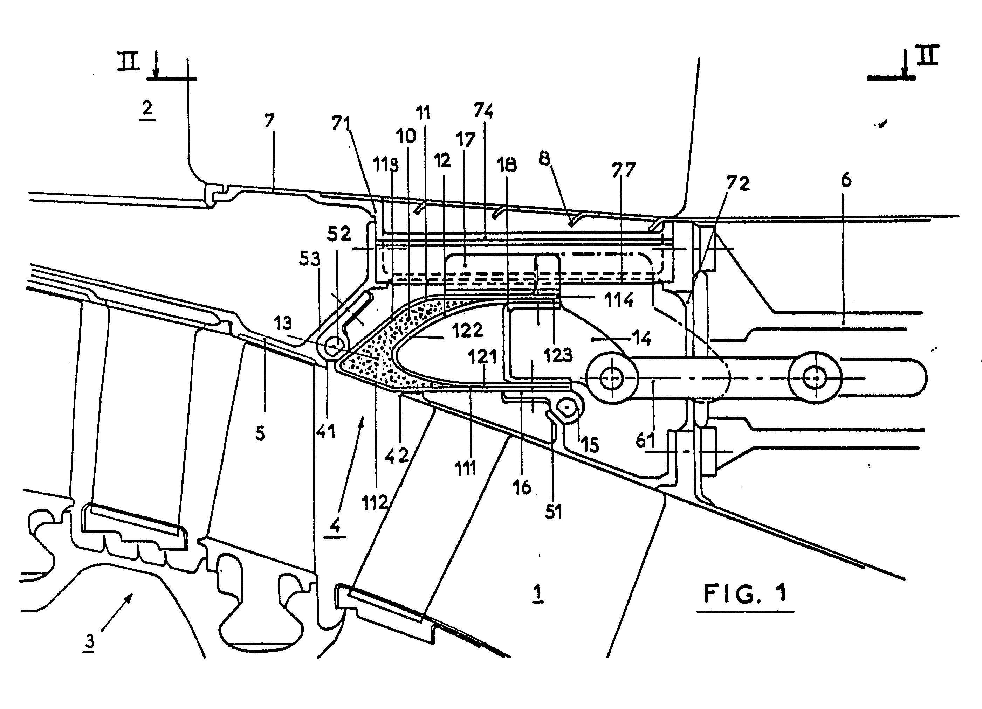

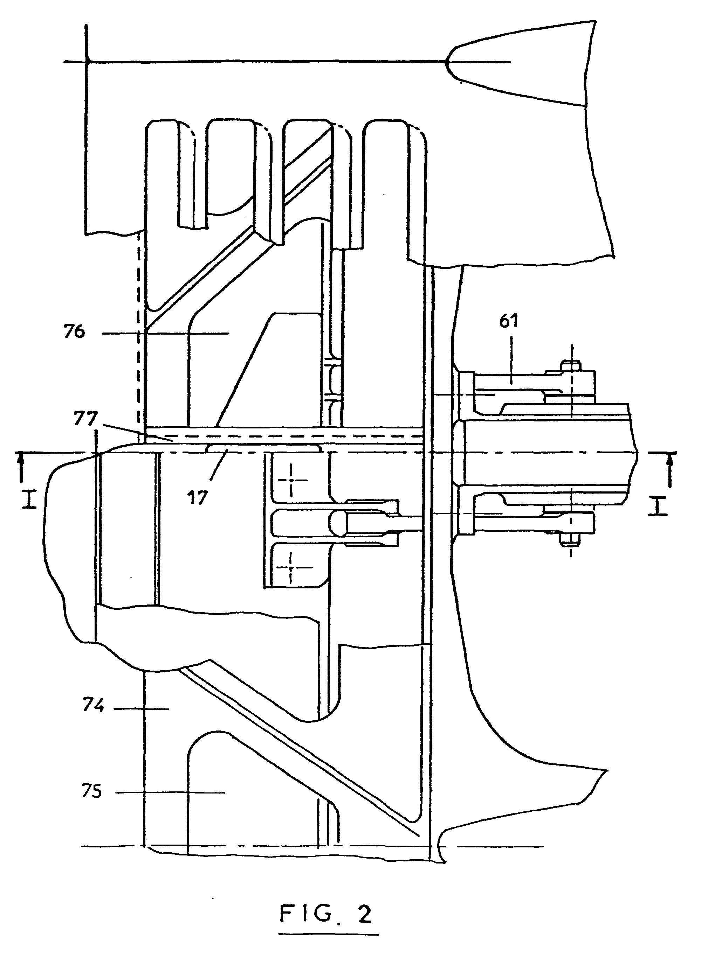

La fig. 1 est une coupe longitudinale partielle d'un compresseur de turboréacteur à double flux équipé d'un anneau de décharge conformément à la présente invention. Cette figure correspond à une coupe suivant I-I de la fig. 2. La fig. 2 est une vue partielle avec des parties arrachées suivant les flêches II-II de la fig. 1.

La fig. 1 est une vue en coupe axiale d'une partie du compresseur de pression intermédiaire d'un turboréacteur à double flux à grand taux de dilution. L'air provenant du compresseur basse pression non représenté est divisé en un flux primaire et un flux secondaire, le premier est comprimé successivement par le compresseur de moyenne pression et le compresseur haute pression puis il passe dans la chambre de combustion et les étages de turbines successifs avant d'être éjecté dans l'atmosphère. Le flux secondaire quant à lui est éjecté directement dans l'atmosphère et fournit l'essentiel de la poussée. La fig. 1 représente une partie de la veine 1 du flux primaire et une partie de la veine 2 du flux secondaire. Le compresseur moyenne pression 3 est mécaniquement indépendant du compresseur haute pression situé à l'aval. Il peut arriver dans certaines phases de fonctionnement du moteur, au démarrage par exemple, que les vitesses de rotation des compresseurs ne soient plus adaptées les unes aux autres et que le compresseur haute pression ne puisse absorber l'air débité par le compresseur moyenne pression; pour empêcher l'apparition du phénomène dit de pompage on décharge une partie de l'air en aval du rotor moyenne pression en ouvrant une soupape annulaire faisant communiquer la veine 1 avec la veine du flux secondaire 2.

Cette soupape est constituée par un anneau 10 coopérant avec une fente annulaire 4 ménagée dans la paroi externe 5 de la veine du compresseur moyenne pression, cette fente est à bords 41 et 42 parallèles, et perpendiculaires à l'axe du moteur. Dans le mode de réalisation représenté, elle occupe une bande tronconique comprise entre le rotor et le redresseur du dernier étage du compresseur et moyenne pression.

L'anneau 10 est mobile axialement dans un espace délimité d'une part, par la paroi 5 et la paroi interne 7 de la veine du flux secondaire, d'autre part, à l'amont, par une virole conique 53 reliant la paroi 5, au niveau du bord 41, à une bride radiale 71 de la paroi 7 et, à l'aval, par une bride radiale 72 reliant les parois 5 et 7. Une virole interne 74 cylindrique est fixée aux brides radiales 71 et 72; elle comporte des découpes triangulaires 75 et trapézoïdales 76, comme cela apparaît sur la fig. 2, pour le passage de l'air dévié qui traverse la paroi 7 par des grilles d'échappement 8 constituées de secteurs 81 assemblés périphériquement dans une découpe annulaire du carter formant la paroi 7. Ces secteurs comportent des aubes annulaires 82 disposées en rangées parallèles et inclinées de façon à perturber le moins possible l'écoulement secondaire par l'air déchargé.

L'anneau 10, conformément à l'invention, est en forme de gouttière orientée sur l'axe du moteur; la distance entre les deux ailes de cette gouttière définit donc l'épaisseur de l'anneau. Celui-ci est constitué de deux peaux 11 et 12, en tôle ou bien de préférence en matériau composite, à section incurvée, enchâssées l'une dans l'autre de manière à ménager entre elles une cavité 13. Cette cavité est occupée par un matériau de remplissage assurant le raidissement de l'anneau, par exemple une résine chargée de billes de verre creuses. La peau extérieure 11 comporte une aile interne 111 de forme cylindrique dont le diamètre correspond à celui de la portée extérieure ménagée sur la paroi 5 au niveau du bord 42 de la fente. Cette aile cylindrique 111 est prolongée par une portion tronconique 112 dont la géométrie correspond à la portion de paroi 5 manquante au droit de la fente 4 pratiquée dans cette paroi; à son plus grand diamètre se raccorde une seconde portion tronconique 113 qui est prolongée par une deuxième aile cylindrique 114 concentrique à la première aile 111 et de plus grand diamètre. La deuxième peau 12 dont la largeur en développement plan est inférieure à celle de la peau 11 est comprise à l'intérieur de l'espace annulaire ainsi défini, elle comporte deux ailes 121 et 123 cylindriques qui sont solidarisées par tout moyen approprié rivet, collage etc. aux ailes cylindriques 111 et 114, et une partie incurvée 122. La cavité annulaire 13 constitue une partie de cet espace annulaire et est délimitée par la peau 11 et la partie incurvée 122 de la peau 12 reliant les deux ailes 121 et 123.

Cet anneau 10 est mobile en translation à l'intérieur de la virole cylindrique 74 entre une position où la partie 112 vient obturer la fente 4 et une position en retrait ouvrant celle-ci. Des moyens sont prévus pour assurer son centrage et le guider dans son déplacement. Dans le mode de réalisation représenté, ces moyens consistent en des patins 17 répartis régulièrement sur la face extérieure de l'anneau coopérant avec des rails de guidage 77 axiaux montés entre les brides 71 et 72. Tout autre moyen équivalent, conviendrait également, par exemple des galets à la place des patins ou une glissière ménagée dans la virole, à la place des rails. L'anneau est entrainé par une pluralité de vérins axiaux 6 synchronisés, régulièrement répartis autour de l'anneau, et, dont le corps est assujetti à la bride radiale 72 et les tiges d'actionnement 61 sont articulées sur des chapes 14 solidaires d'un profilé de renfort 18 à section en U encastré entre les ailes de l'anneau. Ce renfort peut se limiter à des secteurs d'anneau ou bien être étendu à la totalité de la circonférence si nécessaire.

Lorsque l'anneau est en position de fermeture, l'étanchéité de la veine primaire est assurée par deux bourrelets. Un bourrelet 15 monté sur la face intérieure de l'anneau par l'intermédiaire de pattes 16, vient porter sur une bride radiale annulaire 51 de la paroi 5. D'autre part, un bourrelet 52 logé dans l'angle formé par la virole conique 53 de la structure support et le carter constituant la paroi 5, au droit de la lèvre 41 de la fente 4 sert d'appui à l'extrémité avant de l'anneau.

Le fonctionnement du dispositif de décharge de compresseur se déduit aisément à la description qui précède.

En fonctionnement normal du moteur, l'anneau est repoussé par les vérins 6 de façon à venir en appui contre le joint d'étanchéité 52 et la bride 51; dans cette position, la portion tronconique 112 de l'anneau reconstitue, sensiblement la paroi de la veine entre les bords 41 et 42 de la fente. En position rétractée, l'anneau découvre la fente 4 et permet la déviation d'une partie de l'air primaire vers la veine du flux secondaire où la pression est inférieure. Cet air est guidé par la partie tronconique 113 vers les grilles 8 s'ouvrant sur la veine secondaire.

Il est possible d'envisager d'autres applications pour un tel anneau; il peut par exemple être utilisé comme variateur du taux de dilution d'un turboréacteur à double flux en étant disposé dans la veine secondaire et associé à un élément formant col pour faire varier la perte de charge à l'intérieur du canal. On peut également l'utiliser pour assurer le réglage des débits des flux primaires et secondaires par modification de la géométrie du bord de séparation des deux écoulements.

**Revendications**

1. Turbomachine comprenant un compresseur axial muni d'un dispositif de décharge comportant une soupape à déplacement axial, en forme d'anneau (10) coopérant avec une ouverture en forme de fente annulaire (4) tronconique, ménagée dans une paroi (5) de la veine, l'anneau comportant une

premi\u00e8re partie (112) conform\u00e9e de fa\u00e7on \u00e0 venir,
en position de fermeture, se loger entre les bords
(41 et 42) de ladite fente (4) et reconstituer la paroi
(5) de la veine, caract\u00e9ris\u00e9e en ce que l'anneau est
en forme de goutti\u00e8re orient\u00e9e axialement, et est
constitu\u00e9 d'une premi\u00e8re peau annulaire (11) \u00e0
section incurv\u00e9e et d'une deuxi\u00e8me peau annulaire (12) \u00e9galement \u00e0 section incurv\u00e9e enchass\u00e9e
dans, et solidaris\u00e9e \u00e0, ladite premi\u00e8re peau, les
deux peaux m\u00e9nageant entre elles une cavit\u00e9 (13),
ladite premi\u00e8re partie (112) faisant partie int\u00e9gran-
te de la premi\u00e8re peau annulaire (11).

2. Turbomachine selon la revendication 1, ca-
ract\u00e9ris\u00e9e en ce que la cavit\u00e9 (13) est remplie d'un
mat\u00e9riau de remplissage \u00e0 base de r\u00e9sine.

3. Turbomachine selon l'une des revendications
1 et 2, caract\u00e9ris\u00e9e en ce que lesdites peaux (11 et
12) sont en mat\u00e9riaux composites.

4. Turbomachine selon l'une des revendications
pr\u00e9c\u00e9dentes, caract\u00e9ris\u00e9e en ce qu'un profil\u00e9 de
renfort (18) \u00e0 section en U, s'\u00e9tendant au moins
sur un secteur, en relie les ailes.

5. Turbomachine selon la revendication pr\u00e9c\u00e9-
dente, caract\u00e9ris\u00e9e en ce que ladite premi\u00e8re partie (112) se raccorde \u00e0 une seconde partie (113) de
guidage de l'air d\u00e9vi\u00e9 vers l'ext\u00e9rieur de la veine
lorsque l'anneau (10) est en position d'ouverture.

6. Turbomachine selon l'une des revendications
4 ou 5, caract\u00e9ris\u00e9e en ce que l'anneau comporte
sur une de ses faces des premiers moyens de
guidage (17) coop\u00e9rant avec des seconds moyens
de guidage (77) solidaires du carter du compresseur.

7. Turbomachine selon la revendication pr\u00e9c\u00e9-
dente, caract\u00e9ris\u00e9e en ce que lesdits premiers
moyens de guidage sont des patins (17) et lesdits
seconds moyens des rails (77).

**Patentanspr\u00fcche**

1. Turbomaschine mit einem Axialverdichter,
der mit einer Abblasvorrichtung ausgestattet ist,
mit einem mit axialer Verschiebung arbeitenden
Ventil in Form eines Ringes (10), der mit einer
\u00d6ffnung in Form eines kegelstumpff\u00f6rmigen
Ringschlitzes (4) zusammenwirkt, der in einer
Wandung (5) des Str\u00f6mungsgangs angeordnet
ist, wobei der Ring einen ersten Teil (112) umfasst,
der so gestaltet ist, dass er in Schliessstellung
zwischen den R\u00e4ndern (41 und 42) des Ringschlitzes (4) aufgenommen ist und die Wandung (5) des
Str\u00f6mungsgangs wieder vervollst\u00e4ndigt, dadurch
gekennzeichnet, dass der Ring die Form einer
axial gerichteten Rinne hat und aus einer ersten
ringf\u00f6rmigen Aussenhaut (11) mit gew\u00f6lbtem
Querschnitt und einer zweiten ringf\u00f6rmigen Aussenhaut (12) mit ebenfalls gew\u00f6lbtem Querschnitt
besteht, die in die erste Aussenhaut eingepasst
und mit dieser fest verbunden ist, wobei zwischen
der ersten und der zweiten Aussenhaut ein Hohlraum (13) gebildet ist und der genannte erste Teil
(112) des Rings integraler Bestandteil der ersten
ringf\u00f6rmigen Aussenhaut (11) ist.

2. Turbomaschine nach Anspruch 1, dadurch
gekennzeichnet, dass der von der ersten und der
zweiten Aussenhaut (11, 12) begrenzte Hohlraum
(13) mit einem F\u00fcllmaterial auf Harzbasis ausge-
f\u00fcllt ist.

3. Turbomaschine nach einem der Anspr\u00fcche 1
und 2, dadurch gekennzeichnet, dass die erste und
die zweite Aussenhaut (11, 12) aus einem Verbundwerkstoff bestehen.

4. Turbomaschine nach einem der vorhergehenden Anspr\u00fcche, dadurch gekennzeichnet, dass ein
Verst\u00e4rkungsprofil (18) mit U-f\u00f6rmigem Quer-
schnittsprofil sich \u00fcber wenigstens einen Sektor
des Ringes (10) erstreckt, und dessen Schenkel
miteinander verbindet.

5. Turbomaschine nach dem vorhergehenden
Anspruch, dadurch gekennzeichnet, dass der genannte erste Teil (112) des Ringes sich mit einem
zweiten Teil (113) verbindet, der eine Luftf\u00fchrung
bildet und diese von dem Str\u00f6mungsgang nach
aussen leitet, wenn der Ring (10) sich in \u00d6ffnungs-
stellung befindet.

6. Turbomaschine nach Anspruch 4 oder 5, dadurch gekennzeichnet, dass der Ring auf einer
seiner Seiten erste F\u00fchrungsmittel (17) besitzt, die
mit zweiten F\u00fchrungsmitteln (77) zusammenwir-
ken, die mit dem Geh\u00e4use des Verdichters fest
verbunden sind.

7. Turbomaschine nach dem vorhergehenden
Anspruch, dadurch gekennzeichnet, dass die ersten F\u00fchrungsmittel Kufen (17) und die zweiten
F\u00fchrungsmittel Schienen (77) bilden.

**Claims**

1. Turbo-engine having an axial compressor
equipped with a discharge device comprising an
axial-displacement valve in the form of a ring (10),
interacting with an orifice in the form of a frusto-
conical annular gap (4) formed in a wall (5) of the
section, the ring having a first part (112) shaped so
that, in the closing position, it comes to rest between the edges (41 and 42) of the said gap (4) and
reproduces the wall (5) of the section, characterized in that the ring is in the form of an axially
directed gutter and consists of a first annular skin
(11) of curved cross-section and of a second annular skin (12), likewise of curved cross-section, set
into and secured to the said first skin, the two
skins forming a cavity (13) between them, the said
first part (112) being an integral part of the first
annular skin (11).

2. Turbo-engine according to claim 1, characterized in that the cavity (13) is filled with a resin-
based filling material.

3. Turbo-engine according to one of claims 1
and 2, characterized in that the said skins (11 and
12) are made of composite materials.

4. Turbo-engine according to one of the preceding claims, characterized in that a reinforcing profile (18) of U-shaped cross-section, extending at
least over a sector, connects their wings to one
another.

5. Turbo-engine according to the preceding
claim, characterized in that the said first part (112)

**0174255**

is joined to a second part (113) for guiding the air deflected towards the outside of the section when the ring (10) is in the opening position.

6. Turbo-engine according to one of claims 4 or 5, characterized in that the ring has, on one of its faces, first guide means (17) interacting with second guide means (77) integral with the housing of the compressor.

7. Turbo-engine according to the preceding claim, characterized in that the said first guide means are runners (17) and the said second means are rails (77).

FIG. 1

0174255

0174255

FIG. 2